# EUROPÄISCHE PATENTSCHRIFT

(11) **EP 2 662 550 B1**
(45) Veröffentlichungstag und Bekanntmachung des Hinweises auf die Patenterteilung: **04.05.2016**
(21) Anmeldenummer: 13000886.5
(22) Anmeldetag: 22.02.2013
(51) Int. Cl.: F01N 3/20

(54) **Reduktionsmitteldosiersystem mit automatischer Belüftung der Reduktionsmittelleitung**
Reduction agent metering system with automatic ventilation of the reduction agent line
Système de dosage d'agent réducteur avec aération automatique de la conduite d'agent réducteur

(30) Priorität: 07.05.2012 DE 102012008788
(43) Veröffentlichungstag der Anmeldung: 13.11.2013
(73) Patentinhaber: Albonair GmbH, 44263 Dortmund (DE)
(72) Erfinder: Overhoff, Werner, 45772 Marl (DE); Bleicker, Dirk, 58675 Hemer (DE); Hüthwohl, Georg, 59454 Soest (DE)
(74) Vertreter: Patentanwaltskanzlei Methling

(56) Entgegenhaltungen:
- EP-A1- 2 447 490
- WO-A1-2010/034401
- DE-A1-102008 000 594
- DE-A1-102008 009 650
- DE-A1-102009 014 436
- DE-A1-102010 030 050
- DE-A1-102011 014 026
- US-A1- 2010 115 932

## Beschreibung

Die Erfindung betrifft ein Reduktionsmitteldosiersystem zur Einspritzung eines Reduktionsmittels in den Abgasstrom eines Verbrennungsmotors zur selektiven katalytischen Reduktion, wobei das Dosiersystem mit einem Reduktionsmitteltank verbindbar/verbunden ist, aus dem Reduktionsmittel entnommen und mittels einer Dosierpumpe gefördert und über zumindest eine Düse in den Abgasstrom des Verbrennungsmotors eingeleitet wird.
Derartige Reduktionsmitteldosiersysteme sind aus den Dokumenten DE 10 2008 009 650 A, DE 10 2010 030 050 A, DE 100 2009 014 436 A und US 2010/0115932 A bekannt. Aus dem Dokument DE 10 2008 000 594 A ist ein Reduktionsmitteldosiersystem nach dem Oberbegriff gemäß Anspruch 1 bekannt.
Katalysatoren zur selektiven katalytischen Reduktion, sogenannte SCR-Katalysatoren (englisch: selective catalyic reduction, abgekürzt: SCR) werden eingesetzt, um die Stickoxydemission von Dieselmotoren, Feuerungsanlagen, Müllverbrennungsanlagen, Industrieanlagen und dergleichen zu vermindern. Hierzu wird ein Reduktionsmittel in das Abgassystem mit einer Dosiervorrichtung eingedüst. Als Reduktionsmittel dient Ammoniak oder eine Ammoniaklösung oder ein anderes Reduktionsmittel.
Da das Mitführen von Ammoniak in Fahrzeugen sicherheitskritisch ist, wird Harnstoff in wässriger Lösung mit üblicherweise 32,5 % Harnstoffanteil gemäß DIN 70070, das sogenannte AdBlue, eingesetzt. Im Abgas zersetzt sich der Harnstoff bei Temperaturen oberhalb von 150° Celsius in gasförmiges Ammoniak und CO₂. Parameter für die Zersetzung des Harnstoffes sind im wesentlichen Zeit (Verdampfungs- und Reaktionszeit), Temperatur und Tröpfchengröße der eingedüsten Harnstofflösung. In diesen SCR-Katalysatoren wird durch selektive katalytische Reduktion (englisch selective catalyic reduction, SCR) der Ausstoß von Stickoxyden um etwa 90 % reduziert.

Dadurch, dass die üblicherweise eingesetzte 32,5%ige Harnstofflösung bei etwa -11°C gefriert und sich um etwa 10% ausdehnt, können infolge der Ausdehnung der wässrigen Lösung bzw. des Wasseranteils der Lösung Komponenten des Dosiersystems beschädigt werden. Die Problematik des Einfrierens betrifft auch jede andere wässrige Reduktionsmittellösung als die häufig als Reduktionsmittel eingesetzte 32,5%ige Harnstofflösung. Aufgrund des hohen Wasseranteils in der wässrigen Reduktionsmittellösung können somit aufgrund der Anomalie des Wassers bei tiefen Temperaturen Frostschäden auftreten.

Um Beschädigungen von Komponenten des Dosiersystems durch die Ausdehnung infolge eines Einfrierens der Reduktionsmittellösung zu vermeiden, sind die Reduktionsmittel führenden Komponenten in Dosierpausen und insbesondere nach Beendigung der Dosierung von der Reduktionsmittellösung zu befreien.

Ein weiteres Problem besteht darin, dass die Reduktionsmittellösung kristallisieren könnte. Nach Beendigung der Reduktionsmitteleinspritzung muss die Düse daher von Rückständen der Reduktionsmittellösung befreit werden, um zu verhindern, dass diese kristallisieren und die Austrittsöffnung der Düse verstopfen.

Aus der DE 10 2008 013 960 A1 ist es bekannt, mittels Druckluft die Reduktionsmittel führenden Komponenten nach Beendigung der Dosierung zu reinigen. Nachteilig ist dabei, dass diese Vorgehensweise die Aufrechterhaltung für eine gewisse Zeitspanne nach Beendigung der Dosierung erfordert und beispielsweise bei einem Ausfall der elektrischen Versorgung des Dosiersystems nicht ausfallsicher ist.

Weiterhin problematisch bei dieser Lösung ist, dass ein Ventil benötigt wird, welches den Druckluftzweig mit der Reduktionsmittelleitung beim Belüften verbindet, wobei sich gezeigt hat, dass die Ventile im Zusammenspiel mit Reduktionsmittellösung und Luft nicht zuverlässig arbeiten. Ein weiteres Problem besteht darin, dass beim Abschalten der Dosierung weiterhin zumindest für den Zeitraum der Belüftung elektrische Energie für das Belüften zur Verfügung stehen muss. Dies kann jedoch nicht uneingeschränkt gewährleistet werden, da bei Fahrzeugen nach der Richtlinie ADR (Europäische Vereinbarung über den Transport gefährlicher Güter) die Batterie schlagartig getrennt werden kann. In diesem Fall besteht keine elektrische Versorgung mehr, sodass ein Belüften nicht erfolgen kann.

Die Aufgabe der Erfindung ist es, ein Reduktionsmitteldosiersystem der eingangs genannten Art derart weiter zu bilden, dass eine automatische und ausfallsichere Reinigung der Reduktionsmittel führenden Komponenten in Dosierpausen und nach Beendigung der Dosierung erfolgt, sodass diese Komponenten zuverlässig von Rückständen der Reduktionsmittellösung befreit werden, um Frostschäden und Verstopfungen zu verhindern.

Diese Aufgabe wird erfindungsgemäß durch ein Reduktionsmitteldosiersystem gemäß Anspruch 1 gelöst. Vorteilhafte Weiterbildungen der Erfindung sind in den jeweiligen abhängigen Ansprüchen angegeben.

Besonders vorteilhaft bei dem Reduktionsmitteldosiersystem zur Einspritzung eines Reduktionsmittels in den Abgasstrom eines Verbrennungsmotors zur selektiven katalytischen Reduktion, wobei das Dosiersystem mit einem Reduktionsmitteltank verbindbar/verbunden ist, aus dem Reduktionsmittel entnommen und mittels einer Dosierpumpe gefördert und über zumindest eine Düse in den Abgasstrom des Verbrennungsmotors eingeleitet wird, ist es, dass in die Förderleitung auf der Druckseite der Dosierpumpe ein veränderliches Volumen integriert ist, welches durch zumindest ein lageveränderliches Element begrenzt wird, wobei das lageveränderliche Element während des Betriebs der Dosierpumpe gegen eine Rückstellkraft aus seiner Ruhelage heraus in eine Betriebsposition ausgelenkt wird, in der das veränderliche Volumen minimiert ist, und wobei das maximale veränderliche Volumen, welches erreicht wird, wenn das lageveränderliche Element in seiner Ruhelage ist, größer ist als das Volumen der stromab des veränderlichen Volumens angeordneten Förderleitung einschließlich der Düse.

Die Begriffe Reduktionsmitteldosiersystem bzw. Dosiersystem werden im Sinne dieser Beschreibung synonym verwendet. Mit dem Begriff der Reduktionsmittellösung oder des Reduktionsmittels ist jedes zur selektiven katalytischen Reduktion geeignete Reduktionsmittel umfasst, vorzugsweise kommt hierzu eine Harnstofflösung gemäß DIN 70070 zum Einsatz. Die Erfindung ist jedoch nicht hierauf beschränkt.

In einer bevorzugten Gesamtanordnung weist das Reduktinnsmitteldosiersystem einen Tank auf, in den die Reduktionsmittellösung eingefüllt wird und aus dem die Reduktionsmittellösung entnommen und mittels einer Dosierpumpe gefördert und über zumindest eine Düse in den Abgasstrom des Verbrennungsmotors eingeleitet wird.

Erfindungsgemäß ist somit die Anordnung eines durch ein lageveränderliches Element begrenztes veränderliches Volumen vorgesehen, welches in die Förderleitung integriert oder mit der Förderleitung strömungstechnisch verbunden ist, wobei das lageveränderliche Element gegen eine Rückstellkraft aus seiner Ruhelage heraus in eine Betriebsposition verlagert und nach Beendigung der Dosierung aufgrund der Rückstellkraft automatisch in seine Ruhelage zurückkehrt, wodurch das veränderliche Volumen vergrößert wird und die in der Förderleitung und der Düse befindliche Reduktionsmittellösung zurückgesaugt wird und durch die Düse Luft aus dem Abgastrakt in die Düse und die Förderleistung einströmt.

Dabei ist das veränderliche Volumen so dimensioniert, dass das veränderliche Volumen größer ist als das Volumen der stromab des veränderlichen Volumens angeordneten Förderleitung einschließlich der Düse. Es sind somit die im Düsenkörper befindlichen Volumina mit berücksichtigt, das heißt sämtliche Strömungskanäle einschließlich der Düse bis zum Austrittsbereich der Düse in den Abgastrakt des Verbrennungsmotors, um zu gewährleisten, dass die stromab des veränderlichen Volumens gelegenen Reduktionsmittel führenden Strömungskanäle nach Beendigung der Dosierung durch das Dosiersystem vollständig von der Reduktionsmittellösung gereinigt und belüftet werden.

Hierdurch werden sowohl Frostschäden als auch Verstopfungen durch Kristallbildung zuverlässig verhindert. Durch die Anordnung des veränderlichen Volumens zwischen Dosierpumpe und der Austrittsöffnung der Düse wird die Düse samt Düsenöffnung und die stromauf angeordnete Förderleitung nach Beendigung der Reduktionsmitteleinspritzung belüftet und von Reduktionsmittelresten befreit, die anderenfalls einfrieren oder auskristallisieren und die Düse verstopfen könnten.

Kern der Erfindung ist somit die Anordnung eines veränderlichen Volumens und dessen Vergrößerung zur Belüftung der Austrittsöffnung der Düse und der Förderleitung bis hin zur Düse. Bei Abschaltung des Dosiersystems und Beendigung der Dosierung des Reduktionsmittels erfolgt eine automatische Vergrößerung des veränderlichen Volumens, welches strömungstechnisch in Verbindung zu der Reduktionsmittel führenden Förderleitung und der Düse steht, so dass durch die Vergrößerung des Volumens eine automatische Belüftung erfolgt, da zunächst die in der Förderleitung und der Düse befindliche Menge an Reduktionsmittellösung in das Volumen hinein zurückgesaugt und anschließend über die Düse Luft aus dem Abgastrakt in die Förderleitung eingesaugt wird, sodass die Förderleitung und die Düse belüftet sind. Die Anordnung einer Verbindung zwischen dem Druckluftsystem und der Reduktionsmittelförderleitung ist somit nicht mehr erforderlich, wodurch die Zuverlässigkeit des Reduktionsmitteldosiersystems erhört wird. Auch bei einer sofortigen elektrischen Abschaltung wird das System automatisch belüftet und dadurch frostsicher. Das System ist daher auch bei Fahrzeugen einsetzbar, welche gemäß der Richtlinie ADR ausgeführt sind.

In einer bevorzugten Ausführungsform des Reduktionsmitteldosiersystems ist eine Druckluftversorgung vorgesehen, wobei das Reduktionsmittel innerhalb oder außerhalb der Düse mittels Druckluft zerstäubt wird. Zur Zerstäubung des Reduktionsmittels kann eine Mischkammer vorgesehen sein, innerhalb derer eine Zerstäubung des Reduktionsmittels mittels der Druckluft bereits vor der Einleitung in den Abgastrakt erfolgt. In einer bevorzugten Ausführungsform ist jedoch die Düse als außenmischende Zweistoffdüse ausgebildet, bei der aus einer ersten Düsenöffnung die Reduktionsmittellösung austritt und aus einer zweiten Düsenöffnung Druckluft austritt, wobei die beiden Düsenöffnungen derart zueinander ausgerichtet sind, dass die Druckluft das Reduktionsmittel außerhalb der Düse zerstäubt, so dass die Düse als außenmischende Zweistoffdüse ausgebildet ist und die Aerosolbildung außerhalb der Düse erfolgt.

Vorzugsweise wird das lageveränderliche Element durch eine Membran oder einen Kolben gebildet. Bei Anordnung einer Membran, die eine gewisse Flexibilität aufweist, kann diese Membran gleichzeitig auch die Funktion der Dosiergenauigkeitsmembran beinhalten und als Pulsationsdämpfer dienen, wodurch sich eine gleichmäßigere Förderung der Reduktionsmittellösung und ein dadurch gleichmäßiges Spraybild und eine verbesserte Aerosolbildung bei der Einspritzung des Reduktionsmittels in den Abgastrakt einstellt.

Üblicherweise werden als Dosierpumpen Membranpumpen oder Kolbenpumpen eingesetzt, so dass bei einem Förderhub Druckspritzen auftreten. Diese Druckspritzen während der Dosierung können durch die Anordnung einer Membran als lagerveränderliches Element, welches das veränderliche Volumen begrenzt, gedämpft werden, da eine solche Membran eine gewisse Flexibilität und reversible Verformbarkeit aufweist.

Als lageveränderliches Element kann jedoch auch ein Kolben eingesetzt werden, welcher das veränderliche Volumen begrenzt. Im Folgenden werden im Sinne der Erfindung daher die Begriffe Membran und Kolben insofern synonym benutzt, als dass mit dem Begriff der Membran jeweils der Begriff des Kolbens mit umfasst ist

In einer besonders bevorzugten Ausführungsform wird das lageveränderliche Element während des Dosierbetriebs in ausgelenkter Betriebsposition von einem Elektromagneten gehalten. Bei Beendigung der Dosierung oder bei einem Stromausfall wird das lageveränderliche Element durch Abschaltung des Elektromagneten freigegeben und kehrt aufgrund der Rückstellkraft in seine Ruhelage zurück, wobei das durch das lageveränderliche Element begrenzte veränderliche Volumen vergrößert wird und eine Belüftung der stromab gelegenen Förderleitung und der Düse bewirkt.

Vorzugsweise ist eine Feder, insbesondere eine Druckfeder zur Rückstellung des lageveränderlichen Elements aus der ausgelenkten Betriebsposition in die Ruhelage angeordnet. Durch eine derartige Feder kann die Rückstellkraft auf das lageveränderliche Element aufgebracht werden, so dass bei Beendigung der Dosierung und Abschaltung des Elektromagneten oder dergleichen das lageveränderliche Element aus seiner ausgelenkten Betriebsposition automatisch in seine Ruhelage zurückkehrt und hierdurch das von dem lageveränderlichen Element begrenzte Volumen vergrößert wird, so dass ein Unterdruck entsteht und das in der Förderleitung stromab des veränderlichen Volumens befindliche Reduktionsmittel aus der Förderleitung zurückgesaugt wird und die Förderleitung sowie die Düse automatisch belüftet werden.

Alternativ oder kumulativ zu einer Feder können jedoch auch andere Bauelemente oder Bauteile angeordnet sein, welche eine Rückstellkraft bewirken. Bei Verwendung einer Membran kann die Membran derart gestaltet sein, dass diese automatisch eine Rückstellkraft aufbaut, wenn die Membran aus ihrer Ruhelage ausgelenkt wird, so dass die Anordnung zusätzlicher Bauteile in diesem Fall unterbleiben kann.

Vorzugsweise ist zwischen der Druckseite der Dosierpumpe und dem veränderlichen Volumen eine Drossel angeordnet. Durch eine derartige Drossel entsteht ein Druckgefälle mit der Folge, dass der auf das lageveränderliche Element wirksame Druck geringer ist aufgrund der Drosselung, so dass die Haltekraft, welche benötigt wird, um das in die Betriebsposition ausgelenkte lageveränderliche Element in der Betriebsposition gegen diesen Druck und die Rückstellkraft zu halten, entsprechend kleiner ist. Hierdurch können die Bauteile und Baugruppen, welche das Halten des lageveränderlichen Elementes in der ausgelenkten Betriebsposition bewirken, wie beispielsweise ein Elektromagnet, dementsprechend kleiner und platzsparender ausgeführt werden.

In einer besonders bevorzugten Ausführungsform ist das lageveränderliche Element durch zwei kinematisch gekoppelte Membranen gebildet, wobei die das veränderliche Volumen begrenzende erste Membran über das veränderliche Volumen mit der Förderleitung zur Düse verbunden ist.

Dabei ist das veränderliche Volumen größer als das Volumen der stromab des veränderlichen Volumens angeordneten Förderleitung einschließlich der Düse zuzüglich des von der zweiten Membran begrenzten Volumens.

In einer bevorzugten Ausführungsform wird die zweite Membran unmittelbar von dem durch die Dosierpumpe geförderten Reduktionsmittel beaufschlagt, wobei vor der Förderleitung und dem veränderlichen Volumen, welches durch das lageveränderliche Element begrenzt wird, eine Drossel zur Herbeiführung eines Druckgefälles angeordnet ist und das Größenverhältnis der beiden Membranen so gewählt ist, dass die das veränderliche Volumen begrenzende erste Membran bei Beaufschlagung der zweiten Membran mit dem geförderten Reduktionsmittel aufgrund der kinematischen Kopplung der beiden Membranen aus der Ruhelage heraus gegen die Rückstellkraft in die Betriebsposition ausgelenkt wird. In diesem Fall ist das lageveränderliche Element somit durch zwei kinematisch gekoppelte Membranen gebildet.

Das lageveränderliche Element, welches durch zwei kinematisch gekoppelte Membranen gebildet wird, begrenzt somit mit der ersten Membran das veränderliche Volumen, wobei die Fläche der ersten Membran, welche das veränderliche Volumen begrenzt, größer ist, als die Fläche der zweiten Membran. Daher ist zwischen der Druckseite der Pumpe und dem veränderlichen Volumen, welches strömungstechnisch an die Förderleitung gekoppelt ist, eine Drossel angeordnet. Durch diese Drossel wird ein Druckgefälle zwischen der Druckseite der Pumpe und dem veränderlichen Volumen herbeigeführt. Die erste Membran, welche das veränderliche Volumen begrenzt, ist daher dem geringeren Druck ausgesetzt, wohingegen die zweite Membran von dem höheren Druck der Druckseite der Dosierpumpe vor der Drossel beaufschlagt wird und die beiden Membranen derartig dimensioniert sind, dass aufgrund der kinematischen Kopplung durch die Beaufschlagung der zweiten Membran mit dem höheren Druck eine Auslenkung der beiden kinematisch gekoppelten Membranen aus der Ruhelage heraus möglich ist, so dass die erste Membran, welche das veränderliche Volumen begrenzt, aus der Ruhelage heraus gegen die Rückstellkraft und gegen den durch die Drossel herabgesetzten niedrigeren Druck in die ausgelenkte Betriebsposition ausgelenkt wird.

In einer besonders bevorzugten Ausführungsform sind die beiden gekoppelten Membranen und die Drossel als integriertes Bauteil ausgeführt. Insbesondere kann dabei ein als Verbindung zwischen den beiden Membranen dienender Steg die Drossel aufweisen oder aufnehmen. Hierdurch ergibt sich eine besonders kompakte Bauweise der gesamten Anordnung.

In einer bevorzugten Ausführungsform mündet die Druckseite der Dosierpumpe über einen Zugang in das veränderliche Volumen, wobei an einen Ausgang des veränderlichen Volumens die Förderleitung angeschlossen ist.

In diesem Fall übernimmt das das veränderliche Volumen begrenzende lageveränderliche Element, also beispielsweise eine Membran, gleichzeitig die Funktion einer Dosiergenauigkeitsmembran. Hierzu wird die Dosierleitung unterbrochen. Der Ausgang der Pumpe endet direkt auf der Membran, wobei zwischen Pumpe und dem Zugang zu dem veränderlichen Volumen eine Drossel vorgesehen sein kann. Seitlich neben dem Zugang, der in das veränderliche Volumen mündet, ist ein Ausgang des veränderlichen Volumens angeordnet, welcher gleichzeitig den Eingang zu der Förderleitung zur Düse hin bildet.

Durch diese Anordnung werden Druckspitzen der Dosierpumpe durch die Membran ausgeglichen und gedämpft, so dass die Dosiergenauigkeit erhöht wird.

Bei dieser Anordnung kann die dem Zugang und dem Ausgang abgewandte Rückseite des lageveränderlichen Elementes mittels Druckluft einer Druckluftversorgung beaufschlagt sein, mittels derer das lageveränderliche Element gegen die Rückstellkraft aus seiner Ruhelage in die Betriebsposition ausgelenkt wird. In diesem Fall kann auch die Drossel entfallen, da das lageveränderliche Element in diesem Fall mittels des Luftdruckes gegen die Rückstellkraft und gegen den Druck des geförderten Fluides verschoben wird. Da der Luftdruck des Druckluftsystems während des Betriebes permanent anliegt, ist es auch nicht erforderlich, in diesem Fall einen Haltmagneten oder dergleichen vorzusehen.

Vorzugsweise ist eine Druckluftversorgung vorgesehen, die ein Schaltventil und/oder ein Druckregelventil aufweist. Dieses Schaltventil dient der Steuerung, d. h. der Ein- und Abschaltung der Druckluftversorgung und sofern vorgesehen auch der Ein- und Abschaltung der Beaufschlagung der Rückseite des lageveränderlichen Elementes mit der Druckluft während des Dosierbetriebes.

Alternativ oder kumulativ kann die Druckluftversorgung ein Druckregelventil aufweisen. Hierdurch kann die Druckluft auf ein zur Beaufschlagung der Membranrückseite und/oder zur Zerstäubung des Reduktionsmittels mittels Druckluft gewünschtes Druckniveau eingestellt werden. Die Druckluft selbst kann aus einem bordeigenen Druckluftsystem, beispielsweise eines Nutzfahrzeuges, in dessen Abgastrakt das Dosiersystem angeordnet ist, entnommen werden, ohne dass der in dem Druckluftsystem vorherrschende Systemdruck eine Einschränkung darstellt, da der Druck der Druckluft auf den gewünschten Druck abgesenkt werden kann.

In einer bevorzugten Ausführungsform ist das lageveränderliche Element, welches das veränderliche Volumen begrenzt, durch eine Membran gebildet, die als Pulsationsdämpfer dient und Druckspitzen der Dosierpumpe ausgleicht.

Bei der Dosierpumpe kann es sich insbesondere um eine Membranpumpe oder eine Kolbenpumpe handeln. Derartige Pumpen erzeugen bei einem Förderhub Druckspitzen, die durch eine als Pulsationsdämpfer dienende flexible Membran ausgeglichen und gedämpft werden können.

Eine als Dosierpumpe dienende Membranpumpe kann dabei beispielsweise mit einer Frequenz von bis zu 50 Hz oder bis zu 100 Hz angesteuert werden. Das Ansteuerungssignal der Membranpumpe kann dabei pulsweitenmoduliert sein.

Durch eine derartige Pulsweitenmodulation des Ansteuerungssignals der Membranpumpe kann die Dosiergenauigkeit und das Geräuschverhalten verbessert werden. Insbesondere hat sich gezeigt, dass die Dosiergenauigkeit durch die Ansteuerung einer Membranpumpe mit einem pulsweitenmodulierten Signal deutlich verbessert werden kann. Durch eine Pulsweitenmodulation des Ansteuerungssignals der Membranpumpe kann die momentane Förderleistung der Membranpumpe dem jeweiligen Betriebszustand des Verbrennungsmotors sowie der Temperatur und dem Massenstrom des Abgases angepasst werden, sodass die Dosierung des Reduktionsmittels exakt bedarfsorientiert erfolgen kann.

Mehrere Ausführungsbeispiele der Erfindung sind in den Figuren dargestellt und werden nachfolgend näher erläutert. Es zeigen:
- Fig. 1: Eine erste Ausführungsform eines Dosiersystems während des Dosierbetriebs;
- Fig. 2: die Ausführungsform nach Fig. 1 nach Beendigung des Dosierbetriebs im belüfteten Zustand;
- Fig. 3: eine zweite Ausführungsform eines Dosiersystems während des Dosierbetriebs;
- Fig. 4: eine dritte Ausführungsform eines Dosiersystems während des Dosierbetriebs;
- Fig. 5: die Ausführungsform nach Fig. 4 nach Beendigung des Dosierbetriebs im belüfteten Zustand;
- Fig. 6: eine vierte Ausführungsform eines Dosiersystems während des Dosierbetriebs;

Identische Bauteile, Komponenten und Baugruppen sind in den Figuren jeweils mit identischen Bezugszeichen gekennzeichnet.

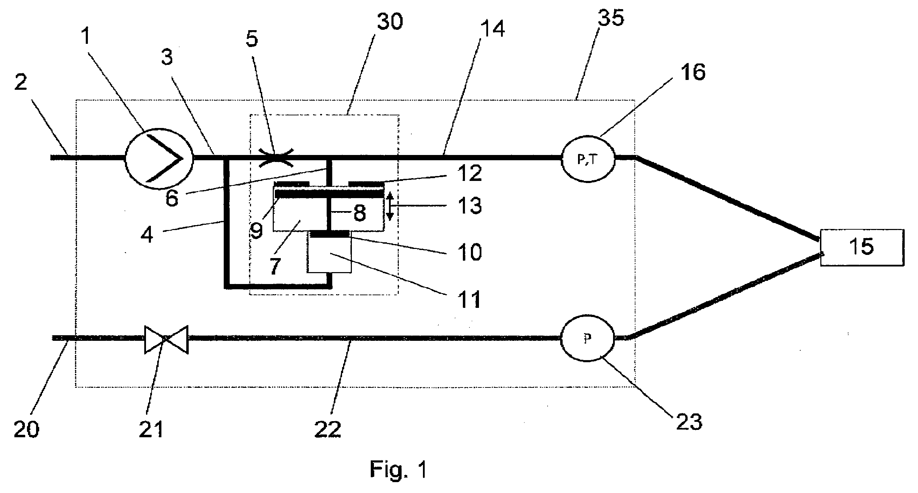

Fig. 1 zeigt das Schema einer ersten Ausführungsform eines Dosiersystems während des Dosierbetriebes. Mittels der Förderpumpe 1 wird Reduktionsmittel über die Saugleitung 2 aus einem nicht dargestellten Tank gefördert und über die Druckseite 3 der Reduktionsmittelpumpe 1 abgegeben. Auf der Druckseite 3 der Reduktionsmittelpumpe 1 ist ein Abzweig 4 vorgesehen. Hinter dem Abzweig 4 ist eine Drossel 5 in die Druckleitung 3 integriert. Hinter der Drossel 5 ist ein Abzweig 6 vorgesehen, der in das veränderliche Volumen 7 mündet.

Das veränderliche Volumen 7 wird begrenzt durch das lageveränderliche Element 8, welches durch eine doppelte Membran gebildet ist. Die doppelte Membran weist eine größere Membranseite 9 auf, welche das veränderliche Volumen 7 begrenzt, sowie rückseitig eine mit der größeren ersten Membran 9 kinematisch gekoppelte kleinere zweite Membran 10, welche in einer kleineren Kammer 11 verschieblich angeordnet ist.

Die kleinere zweite Membran 10 wird von dem hohen Druck der Förderpumpe 1 beaufschlagt, da der Abzweig 4 vor der Drossel 5 an die Druckleitung 3 der Förderpumpe 1 angeschlossen ist und in die Kammer 11 mündet.

Die größere erste Membran 9, welche das veränderliche Volumen 7 begrenzt, ist mit dem durch die Drossel 5 geminderten Druck beaufschlagt.

Der Querschnitt der kleineren zweiten Membran 10 ist im Verhältnis zum Querschnitt der größeren ersten Membran 9 so gewählt, dass aufgrund des über den Abzweig 4 anliegenden höheren Drucks während des Dosierbetriebes die Doppelmembran 8 aus der Ruhelage heraus in die in Fig. 1 dargestellte Betriebsposition ausgelenkt wird. Während des Betriebes wird die Membran 9 durch den Elektromagneten 12 in der ausgelenkten Betriebsposition gehalten.

Der Verfahrweg der Doppelmembran 8 mit der großen Membran 9 ist durch den Doppelpfeil 13 dargestellt. Während des Dosierbetriebes ist die Doppelmembran 8 mit der das veränderliche Volumen 7 begrenzenden Membran 9 in die in Fig. 1 dargestellte Betriebsposition ausgelenkt, so dass das veränderliche Volumen 7 minimiert ist.

Über die Förderleitung 14 wird das Reduktionsmittel weiter zur Düse 15 gefördert. In die Förderleitung 14 ist integriert ein Druck- und Temperatursensor 16 zur Überwachung der Temperatur und des Druckes des Reduktionsmittels in der Förderleitung 14.

Ferner ist vorgesehen eine Druckluftversorgung 20 mit einem Schaltventil 21, welches der Zu- und Abschaltung der Druckluftversorgung dient. In die Druckluftleitung 22 ist integriert ein Drucksensor 23.

Die Druckluftleitung 22 mündet ebenfalls in die Düse 15, bei der es sich um eine außenmischende Zweistoffdüse handelt. Das bedeutet, dass durch die Düse 15 durch eine erste Öffnung die über die Förderleitung 14 zugeführte Reduktionsmittellösung in den Abgastrakt eingespritzt wird und eine zweite Düsenöffnung dergestalt angeordnet ist, dass aus der zweiten Düsenöffnung austretende Druckluft das Reduktionsmittel außerhalb der Düse zerstäubt und das Aerosol bildet.

Die Drossel 5 sowie das als Doppelmembran ausgeführte lageveränderliche Element 8, welches das veränderliche Volumen 7 begrenzt, sind als integriertes Bauelement 30 ausgeführt und auf einem Komponententräger 35 angeordnet. Der Komponententräger 35 nimmt ferner sämtlich benötigte Leitungen 14, 22 sowie die Förderpumpe 1, das Schaltventil 21 der Druckluftversorgung und die Sensoren 16, 23 auf, so dass das Dosiersystem als integrierte Baueinheit ausgeführt sein kann.

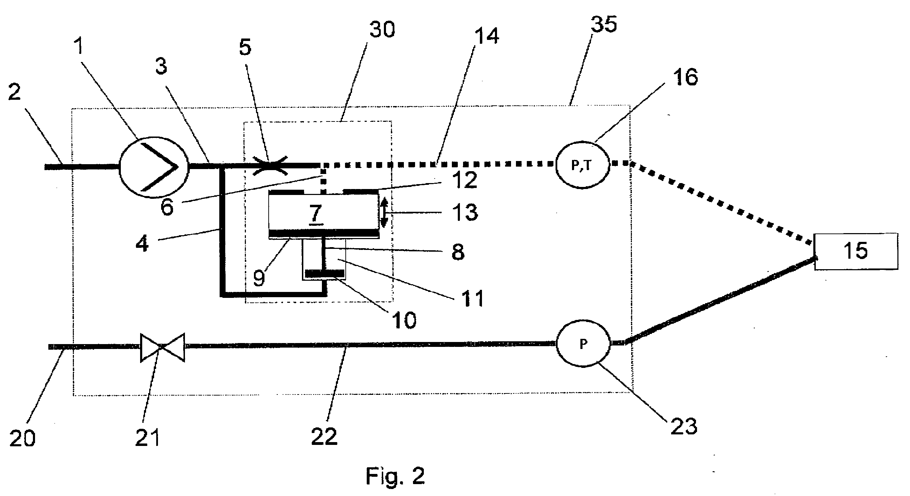

Das Volumen des veränderlichen Volumens 7 ist so dimensioniert, dass dieses größer ist, als das Volumen der Kammer 11 zuzüglich der stromab des Abzweiges 6 gelegenen Förderleitung 14 und der Düse 15, um ein Belüften der Förderleitung 14 und der Düse 15 zu ermöglichen, wenn die Dosierung unterbrochen oder beendet wird. Dieser Zustand ist in Fig. 2 dargestellt und wird nachfolgend erläutert.

Nach Beendigung der Dosierung durch Abschaltung der Förderpumpe 1 entfällt der über den Abzweig 4 auf der kleinen Membran 10 lastende Förderdruck der Förderpumpe 1, so dass das als Doppelmembran 8 ausgeführte lageveränderliche Element, wie durch den Doppelpfeil 13 angedeutet, in seine Ruhelage zurückwandert, da auch der Haltemagnet 12 bei Beendigung der Dosierung abgeschaltet wird und eine in den Fig. 1 und 2 nicht dargestellte Rückstellfeder vorgesehen ist, die die Rückbewegung der Doppelmembran 8 in die in Fig. 2 dargestellte Ruheposition bewirkt.

Hierdurch wird das von der größeren Membran 9 begrenzte veränderliche Volumen 7 vergrößert, so dass das in der Förderleitung 14 befindliche Reduktionsmittel in das Volumen 7 zurückgesaugt und ferner über die Düse 15 Luft aus dem Abgastrakt in die Düse 15 und die Förderleitung 14 eingezogen wird. Der belüftete Zustand ist angedeutet durch die gestrichelte Darstellung der Förderleitung 14. In dem in Fig. 2 darstellten Zustand ist daher die Förderleitung 14, die Düse 15 sowie der Abzweig 6 vollständig belüftet, so dass Frostschäden zuverlässig vermieden werden.

Die Entlüftung wird somit durch das in dem Ausführungsbeispiel als Doppelmembran 8 ausgebildete lageveränderliche Element innerhalb der Kammer des Volumens 7 bewirkt, wobei die größere Membranseite 9 mit der Dosierleitung 14 zur Düse 15 verbunden ist. Auf der größeren Membranseite 9 ist in der Kammer 7 eine nicht dargestellte Druckfeder zur Rückstellung der Membrane 9 in die Ruheposition, wie sie in Fig. 2 dargestellt ist, angeordnet. Die kleine Membranseite 10 ist über den Abzweig 4 mit der Druckseite 3 der Pumpe 1 verbunden und wird während des Betriebs mit dem ungedrosselten höheren Druck beaufschlagt. Nach Abschaltung der Dosierung lastet jedoch kein Druck mehr auf der kleineren Membran 10, sodass die Doppelmembran 8 aufgrund der Rückstellkraft in die Ruheposition gemäß Fig. 2 zurückfährt.

Das Volumen 7 hat mindestens das Volumen der kleineren Kammer 11 zuzüglich des Volumens der Dosierleitung 14 und des Volumens der Reduktionsmittelförderleitungen innerhalb der Düse 15 sowie ferner eine kleine Reserve für die Ausdehnung dieser Volumina bei Frost.

Bei Beendigung der Dosierung wird durch Abschalten des Haltemagneten 12 die Doppelmembran 8 freigegeben, so dass durch die nicht dargestellte Rückstellfeder in die Ruheposition, wie sie in Fig. 2 dargestellt ist, zurückgeschoben werden kann. Die in der kleinen Kammer 11 befindliche Menge an Reduktionsmittel fließt nun bei Rückstellung der Doppelmembran 8 in die große Kammer 7, wobei gleichzeitig auch die in der Förderleitung 14 und der Düse 15 befindliche Menge an Reduktionsmittel über die Förderleitung 14 in die Kammer 7 zurückgezogen wird. Weiterhin wird aus dem Abgasstrang Luft durch die Düse 15 und die Dosierleitung 14 und durch den Drucksensor 16 bis in die Kammer 7 angesaugt. Die Luft in der Kammer 7 kann dann bei Frost die Ausdehnung des Reduktionsmittels ausgleichen.

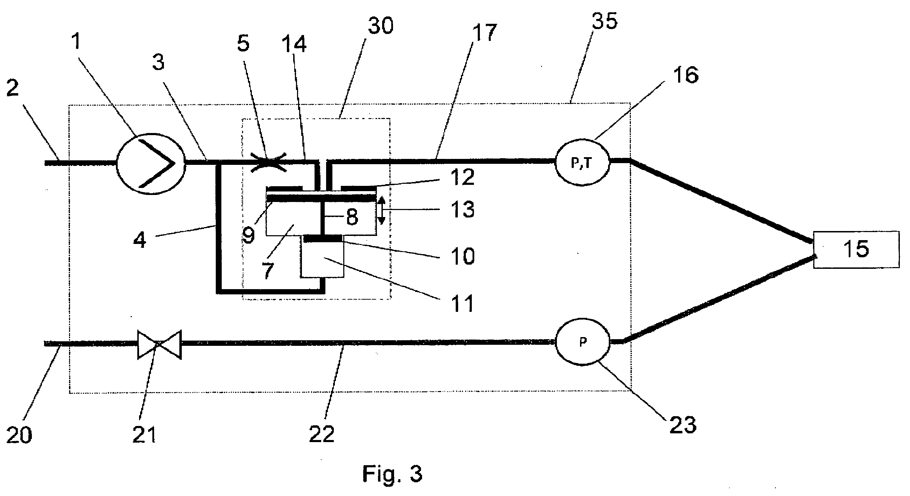

In Fig. 3 ist dargestellt eine zweite Ausführungsform eines Dosiersystems, welches einen sehr ähnlichen Aufbau aufweist, wie die zuvor erläuterte erste Ausführungsform, so dass nur auf den konstruktiven Unterschied eingegangen wird. Die Förderleitung 14 ist in diesem Fall unterbrochen und mündet über einen Zugang in der Kammer 7 oberhalb der Membran 9. Etwas versetzt neben dem Zugang befindet sich ein Ausgang aus der Kammer 7 zur weiteren Förderleitung 17 hin zur Düse 15. Über die Düse 15 wird das Reduktionsmittel in den Abgastrakt eingespritzt und mittels Druckluft zerstäubt.

Dadurch, dass die Förderleitung 14 unterbrochen ist und Zugang und Ausgang zum Volumen 7 getrennt oberhalb der Membran 9 angeordnet sind, kann die Membran 9 in diesem Fall gleichzeitig die Funktion der Dosiergenauigkeitsmembran übernehmen. Eine derartige flexible Membran 9 ist geeignet, während des Dosierbetriebes einen Überströmkanal vom Zugang zum Ausgang des Volumens 7 selbsttätig bei Anliegen eines entsprechenden Förderdrucks freizugeben respektive zu vergrößern und am Ende eines Pumpenhubs, wenn der Förderdruck entsprechend absinkt, wieder durch den Rückgang in die Ausgangsposition der reversiblen Auslenkung der Membran 9 zu erschließen. Bei Förderhuben der Förderpumpe auftretende Spitzen und Schwankungen im Druck und Massenstrom des Reduktionsmittels können dann über die Membran 9 ausgeglichen werden, da Zugang und Ausgang zu dem Volumen 7 getrennt voneinander angeordnet sind und die Membran unter auftretenden Druckspitzen aufgrund der Lageveränderlichkeit zurückweichen und ein variables Ausgleichsvolumen während des Betriebes bereitstellen kann.

Bei der in Fig. 3 dargestellten zweiten Ausführungsform wird die Membran 9 durch einen Pumpenhub und den dadurch auftretenden Druck etwas von dem Zugang und dem Ausgang an der Kammer 7 abgehoben, so dass das Reduktionsmittel oberhalb der Membran 9 von dem Zugang zu der Kammer 7 zum Ausgang in die Förderleitung 17 fließen kann. Aufgrund der Flexibilität der Membran 9 wird bei dieser Ausführungsform gleichzeitig die Funktion der Dosiergenauigkeitsmembran erfüllt.

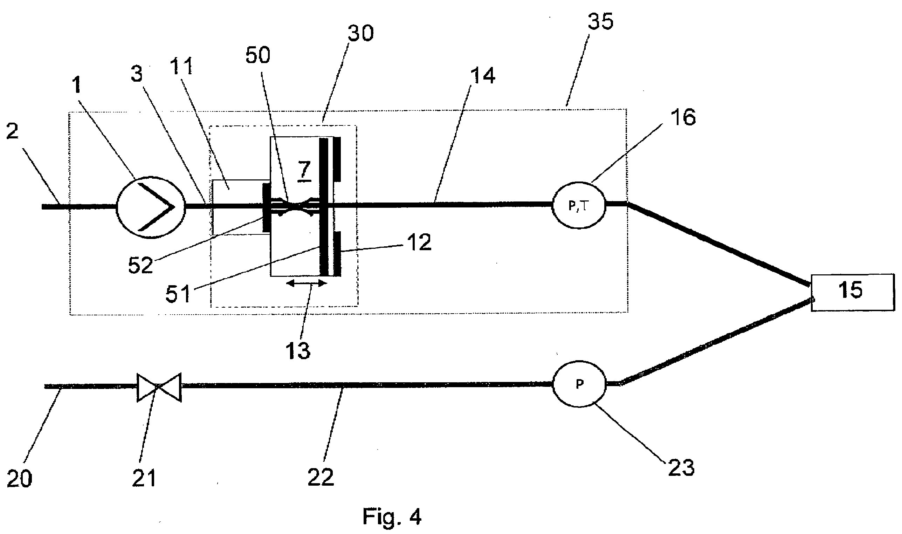

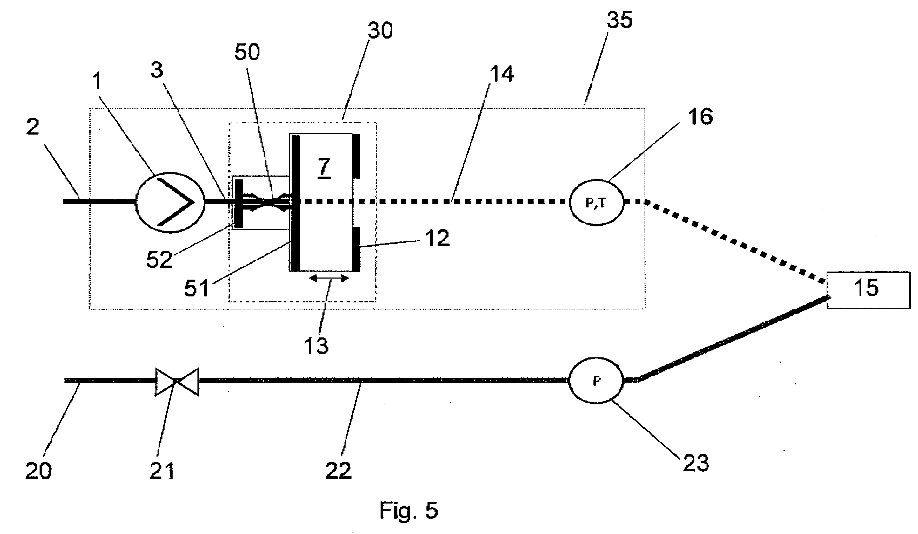

Bei der dritten Ausführungsform eines Dosiersystems gemäß den Fig. 4 und 5 ist die Drossel 50 in den Steg zwischen den kinematisch gekoppelten Membranen 51, 52 des als Doppelmembran ausgebildeten lageveränderlichen Elementes integriert, so dass sich eine sehr kompakte integrierte Bauweise ergibt. Die Druckseite 3 der Förderpumpe 1 mündet direkt in die kleine Kammer 11, so dass die kleinere Membran 52 unmittelbar durch den ungedrosselten Förderdruck der Pumpe 1 beaufschlagt wird. Durch die in den Steg integrierte Drossel 50 wird ein Druckgefälle herbeigeführt, so dass der Fluiddruck in der Förderleitung 14 entsprechend reduziert ist. Im übrigen ist die Funktionsweise identisch zu der vorher erläuterten, d. h., dass während des Dosierbetriebes die Doppelmembran aus der Ruhelage heraus in die in Fig. 4 dargestellte Betriebsposition ausgelenkt und durch den Elektromagneten 12 in dieser Position gehalten wird.

In Fig. 5 ist dargestellt der Zustand nach Beendigung der Dosierung und Abschaltung des Elektromagneten 12, wodurch die Doppelmembran infolge der Rückstellkraft der nicht dargestellten Druckfeder in die in Fig. 5 dargestellte Ruheposition zurückgeht und das veränderliche Volumen 7 entsprechend vergrößert, so dass Luft Ober die Düse 15 und die Förderleitung 14 aus dem Abgastrakt angesaugt werden kann und ein Belüften der Düse 15 und der Förderleitung 14 bewirkt.

Allen drei zuvor beschriebenen Ausführungen ist gemein, dass bei Betätigung der Förderpumpe 1 mit genügend hohem Fördervolumenstrom an der Drossel 5, 50 ein Druckgefälle entsteht. Dieses Druckgefälle ist groß genug, so dass die kleine zweite Membran 10, 52 die große erste Membran 9, 51 aus der Ruheposition heraus in die Betriebsposition zu verschieben in der Lage ist. Die beiden Membranen sind kinematisch gekoppelt. Durch Verschiebung der größeren Membran 9, 51 wird somit gleichzeitig das Volumen in der Kammer 7 minimiert und das nach Beendigung des Dosierbetriebes in der Kammer befindliche Reduktionsmittel sowie das Luftvolumen wird in die Dosierleitung 14, 17 gefördert und gleichzeitig die Rückstellfeder zusammengedrückt. Der Anschluss der Förderleitung 14, 17 an der Kammer 7 ist derart positioniert, dass zuerst die Luft und dann das in der Kammer befindliche restliche Reduktionsmittel in die Dosierleitung gefördert wird. Zum Halten der Membran 9, 51 in der Dosierstellung unabhängig vom Differenzdruck an der Drossel 5, 50 wird der Elektromagnet 12 angesteuert und eingeschaltet, so dass die Membran 9, 51 in der Betriebsposition gegen die Rückstellkraft während des Dosierbetriebes fixiert wird.

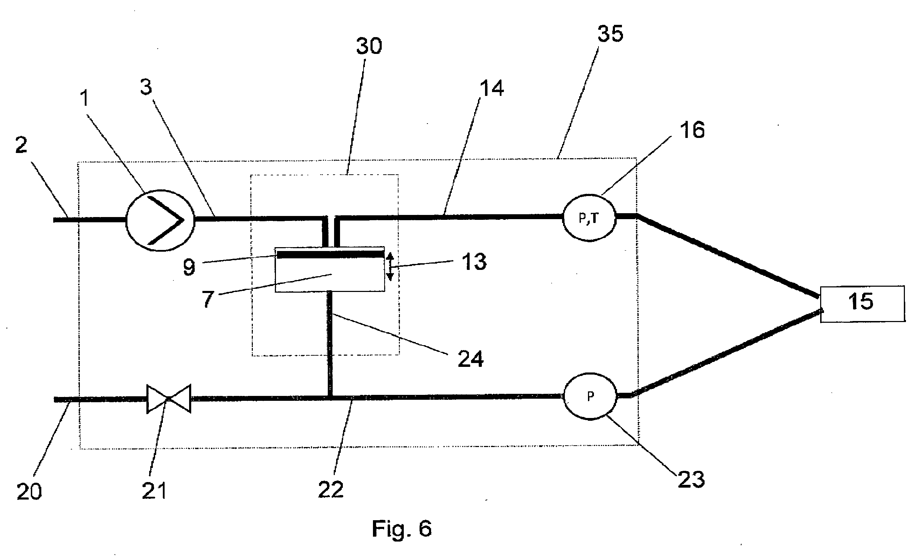

Bei der in Fig. 6 dargestellten Ausführungsform wird das das veränderliche Volumen 7 begrenzende lageveränderliche Element 9 durch rückseitige Druckluftbeaufschlagung aus der Ruhelage heraus in die in Fig. 6 dargestellte Betriebsposition verlagert. Oberhalb der Membran 9 mündet die Druckleitung 3 der Förderpumpe 1 unmittelbar in die Kammer 7. Ferner geht von dieser Kammer 7 aus an der Oberseite leicht versetzt zur Zuleitung 3 die Förderleitung 14 zur Düse 15, bei der es sich wiederum um eine außenmischende Zweistoffdüse handelt, bei der mittels Druckluft das Reduktionsmittel außerhalb der Düse 15 zerstäubt wird und die Aerosolbildung somit im Abgastrakt erfolgt.

Nach Abschaltung der Dosierung erfolgt ebenfalls die Abschaltung der Druckluftversorgung mittels des Schaltventils 21, so dass die Membran 9 aufgrund der nicht dargestellten Rückstellfeder entlang des Doppelpfeiles 13 nach unten in die Ruheposition zurückgestellt wird. Hierdurch erfolgt ein automatisches Ansaugen von Luft über die Düse 15 und die Förderleitung 14 bis in die Kammer 7, so dass die Reduktionsmittel fördernden Komponenten entlüftet sind. Ferner dient die Membran 9 bei dieser Ausführungsform gleichzeitig als Dosiergenauigkeitsmembran, da der Zugang und der Ausgang zur Kammer 7 wiederum getrennt ausgeführt sind und die flexible Membran 9 als Dämpfungselement dienen kann.

Ferner kann bei dieser Ausführungsform auf einen Haltemagnet verzichtet werden, da der Luftdruck der Druckluftversorgung 20 über den Abzweig 24 permanent auf der Rückseite der Membran 9 anliegt.

Durch Verwendung einer flexiblen Membran 9 als lageveränderliches Element, welches das veränderliche Volumen 7 begrenzt, kann die Membran 9 gleichzeitig die Funktion eines Pulsationsdämpfers ausüben und Druckspitzen der Förderpumpe 1 dämpfen.

## Patentansprüche

1. Reduktionsmitteldosiersystem zur Einspritzung eines Reduktionsmittels in den Abgasstrom eines Verbrennungsmotors zur selektiven katalytischen Reduktion, wobei das Dosiersystem mit einem Reduktionsmitteltank verbindbar/verbunden ist, aus dem Reduktionsmittel entnommen und mittels einer Dosierpumpe (1) gefördert und über zumindest eine Düse (15) in den Abgasstrom des Verbrennungsmotors eingeleitet wird, wobei in die Förderleitung (14) auf der Druckseite der Dosierpumpe (1) ein veränderliches Volumen (7) integriert ist, welches durch zumindest ein lageveränderliches Element (9) begrenzt wird, wobei das lageveränderliche Element (9) während des Betriebs der Dosierpumpe (1) gegen eine Rückstellkraft aus seiner Ruhelage heraus in eine Betriebsposition ausgelenkt wird, in der das veränderliche Volumen (7) minimiert ist, und wobei das maximale veränderliche Volumen (7), welches erreicht wird, wenn das lageveränderliche Element (9) in seiner Ruhelage ist, größer ist als das Volumen der stromab des veränderlichen Volumens (7) angeordneten Förderleitung (14, 17) einschließlich der Düse (15), **dadurch gekennzeichnet, dass** eine Druckluftversorgung (20) besteht und das Reduktionsmittel außerhalb der Düse (15) mittels Druckluft zerstäubt wird, wobei die Düse (15) als außenmischende Zweistoffdüse ausgebildet, bei der aus einer ersten Düsenöffnung die Reduktionsmittellösung austritt und aus einer zweiten Düsenöffnung Druckluft austritt, wobei die beiden Düsenöffnungen derart zueinander ausgerichtet sind, dass die Druckluft das Reduktionsmittel außerhalb der Düse (15) zerstäubt, wobei das lageveränderliche Element durch zwei kinematisch gekoppelte Membranen (9, 10, 51, 52) gebildet ist, wobei die das veränderliche Volumen (7) begrenzende erste Membran (9, 51) über das veränderliche Volumen (7) mit der Förderleitung zur Düse verbunden ist.

2. Dosiersystem nach einem der vorherigen Ansprüche, **dadurch gekennzeichnet, dass** das lageveränderliche Element (9) während des Dosierbetriebs in ausgelenkter Betriebsposition von einem Elektromagneten (12) gehalten wird.

3. Dosiersystem nach einem der vorherigen Ansprüche, **dadurch gekennzeichnet, dass** eine Feder, insbesondere eine Druckfeder zur Rückstellung des lageveränderlichen Elements (9) aus der ausgelenkten Betriebsposition in die Ruhelage angeordnet ist.

4. Dosiersystem nach einem der vorherigen Ansprüche, **dadurch gekennzeichnet, dass** zwischen der Druckseite der Dosierpumpe (1) und dem veränderlichen Volumen (7) eine Drossel (5, 50) angeordnet ist.

5. Dosiersystem nach einem der vorherigen Ansprüche, **dadurch gekennzeichnet, dass** die zweite Membran (10, 52) unmittelbar von dem durch die Dosierpumpe geförderten Reduktionsmittel beaufschlagt wird, wobei vor der Förderleitung (14) und dem veränderlichen Volumen (7), welches durch das lageveränderliche Element begrenzt wird, eine Drossel (5, 50) zur Herbeiführung eines Druckgefälles angeordnet ist und das Größenverhältnis der beiden Membranen (9, 10, 51, 52) so gewählt ist, dass die das veränderliche Volumen (7) begrenzende erste Membran (9, 51) bei Beaufschlagung der zweiten Membran (10, 52) mit dem geförderten Reduktionsmittel aufgrund der kinematischen Kopplung der beiden Membranen (9, 10, 51, 52) aus der Ruhelage heraus gegen die Rückstellkraft in die Betriebsposition ausgelenkt wird.

6. Dosiersystem nach Anspruch 5, **dadurch gekennzeichnet, dass** die beiden gekoppelten Membranen (51, 52) und die Drossel (50) als integriertes Bauteil ausgeführt sind, insbesondere dass ein als Verbindung zwischen den beiden Membranen (51, 52) dienender Steg die Drossel (50) aufweist.

7. Dosiersystem nach einem der vorherigen Ansprüche, **dadurch gekennzeichnet, dass** die Druckseite der Dosierpumpe (1) über einen Zugang in das veränderliche Volumen (7) mündet, wobei an einen Ausgang des veränderlichen Volumens die Förderleitung (14, 17) angeschlossen ist.

8. Dosiersystem nach Anspruch 7, **dadurch gekennzeichnet, dass** die dem Zugang und dem Ausgang abgewandte Rückseite des lageveränderlichen Elements (9) mittels Druckluft einer Druckluftversorgung (20) beaufschlagt ist, mittels derer das lageveränderliche Element (9) gegen die Rückstellkraft aus seiner Ruhelage in die Betriebsposition ausgelenkt wird.

9. Dosiersystem nach einem der vorherigen Ansprüche, **dadurch gekennzeichnet, dass** eine Druckluftversorgung (20) vorgesehen ist, die ein Schaltventil (21) und/oder ein Druckregelventil aufweist.

10. Dosiersystem nach einem der vorherigen Ansprüche, **dadurch gekennzeichnet, dass** das lageveränderliche Element, welches das veränderliche Volumen (7) begrenzt, durch eine Membran (9, 51) gebildet ist, die als Pulsationsdämpfer dient und Druckspitzen der Dosierpumpe (1) ausgleicht.

11. Dosiersystem nach einem der vorherigen Ansprüche, **dadurch gekennzeichnet, dass** es sich bei der Dosierpumpe (1) um eine Membranpumpe oder eine Kolbenpumpe handelt.

## Claims

1. Reducing agent metering system for the injection of a reducing agent into the flow of exhaust gas from a combustion engine, for selective catalytic reduction, wherein the metering system is connectable/connected to a reducing agent tank from which reducing agent is taken and conveyed by means of a metering pump (1) and is introduced, through at least one nozzle (15), into the flow of exhaust gas from the combustion engine, wherein a variable volume (7) is integrated in the conveyor line (14) on the pressure side of the metering pump (1), said variable volume being delimited by at least one positionally variable element (9), the positionally variable element (9) being deflected out of its resting position, during operation of the metering pump (1), counter to a restoring force, into an operating position in which the variable volume (7) is minimised, and the maximum variable volume (7), which is achieved when the positionally variable element (9) is in its resting position, being greater than the volume of the conveyor line (14, 17), including the nozzle (15), which is arranged downstream of the variable volume (7), **characterised in that** there is a supply of compressed air (20) and the reducing agent is nebulised outside the nozzle (15) by means of compressed air, the nozzle (15) being embodied as an externally mixing dual-substance nozzle, in which the reducing agent solution is dispensed from a first nozzle opening and compressed air is dispensed from a second nozzle opening, the two nozzle openings being aligned with each other such that the compressed air nebulises the reducing agent outside the nozzle (15), the positionally variable element being formed by two kinetically coupled diaphragms (9, 10, 51, 52), the first diaphragm (9, 51) which delimits the variable volume (7) being connected with the conveyor line to the nozzle via the variable volume (7).

2. Metering system according to one of the preceding claims, **characterised in that** the positionally variable element (9) is retained in the deflected operating position by an electromagnet (12) during the metering operation.

3. Metering system according to one of the preceding claims, **characterised in that** a spring is provided, particularly a compression spring for restoring the positionally variable element (9) from the deflected operating position into the resting position.

4. Metering system according to one of the preceding claims, **characterised in that** a restrictor (5, 50) is arranged between the pressure side of the metering pump (1) and the variable volume (7).

5. Metering system according to one of the preceding claims, **characterised in that** the second diaphragm (10, 52) is directly impacted by the reducing agent conveyed through the metering pump, while upstream of the conveyor line (14) and the variable volume (7) which is delimited by the positionally variable element there is a restrictor (5, 50) for producing a pressure gradient and the ratio of sizes of the two diaphragms (9, 10, 51, 52) is selected such that, when the second diaphragm (10, 52) is impacted by the reducing agent conveyed, the first diaphragm (9, 51) delimiting the variable volume (7) is deflected out of the resting position into the operating position, counter to the restoring force, as a result of the kinetic coupling of the two diaphragms (9, 10, 51, 52).

6. Metering system according to claim 5, **characterised in that** the two coupled diaphragms (51, 52) and the restrictor (50) are configured as an integrated component, and more particularly a crosspiece serving as a connector between the two diaphragms (51, 52) comprises the restrictor (50).

7. Metering system according to one of the preceding claims, **characterised in that** the pressure side of the metering pump (1) opens into the variable volume (7) via an access, while the conveyor line (14, 17) is connected to an outlet from the variable volume.

8. Metering system according to claim 7, **characterised in that** the rear of the positionally variable element (9) remote from the access and the outlet is impacted by compressed air from a compressed air supply (20), by means of which the positionally variable element (9) is deflected from its resting position into the operating position, counter to the restoring force.

9. Metering system according to one of the preceding claims, **characterised in that** a compressed air supply (20) is provided which comprises a switching valve (21) and/or a pressure regulating valve.

10. Metering system according to one of the preceding claims, **characterised in that** the positionally variable element which delimits the variable volume (7) is formed by a diaphragm (9, 51) which serves as a snubber and equalizes pressure peaks in the metering pump (1).

11. Metering system according to one of the preceding claims, **characterised in that** the metering pump (1) is a diaphragm pump or a piston pump.

## Revendications

1. Système de dosage d'agent réducteur pour l'injection d'un agent réducteur dans le courant de gaz d'échappement d'un moteur à combustion à des fins de réduction catalytique sélective, dans lequel le système de dosage peut être ou est relié à un réservoir d'agent réducteur, duquel est soutiré de l'agent réducteur qui est acheminé au moyen d'une pompe de dosage (1) et introduit via au moins une buse (15) dans le courant de gaz d'échappement du moteur à combustion, auquel, dans la conduite d'alimentation (14), est intégré, du côté refoulement de la pompe de dosage (1), un volume variable (7) qui est délimité par au moins un élément à position variable (9), dans lequel l'élément à position variable (9) est commuté, au cours du fonctionnement de la pompe de dosage (1), à l'encontre d'une force de rappel, de sa position de repos à une position de service, dans laquelle le volume variable (7) est réduit au minimum, et dans lequel le volume variable maximal (7), qui est atteint lorsque l'élément à position variable (9) est dans sa position de repos, est plus grand que le volume de la conduite d'alimentation (14, 17) agencée en aval du volume variable (7), y compris la buse (15), **caractérisé en ce qu'**il y a une source d'air comprimé (20) et l'agent réducteur est pulvérisé à l'extérieur de la buse (15) au moyen d'air comprimé, dans lequel la buse (15) se présente sous la forme d'une buse binaire à mélange externe, dans laquelle la solution d'agent réducteur sort d'une première ouverture de buse et l'air comprimé sort d'une seconde ouverture de buse, dans lequel les deux ouvertures de buse sont orientées l'une par rapport à l'autre de sorte que l'air comprimé pulvérise l'agent réducteur à l'extérieur de la buse (15), dans lequel l'élément à position variable est formé de deux membranes à couplage cinématique (9, 10, 51, 52), et dans lequel la première membrane (9, 51) délimitant le volume variable (7) est reliée via le volume variable (7) à la conduite d'alimentation menant à la buse.

2. Système de dosage selon l'une quelconque des revendications précédentes, **caractérisé en ce que** l'élément à position variable (9) est maintenu, au cours de l'opération de dosage, en position de service commutée par un électroaimant (12).

3. Système de dosage selon l'une quelconque des revendications précédentes, **caractérisé en ce qu'**un ressort, en particulier un ressort de compression, est agencé pour le rappel de l'élément à position variable (9) depuis la position de service commutée en position de repos.

4. Système de dosage selon l'une quelconque des revendications précédentes, **caractérisé en ce qu'**un étranglement (5, 50) est aménagé entre le côté refoulement de la pompe de dosage (1) et le volume variable (7).

5. Système de dosage selon l'une quelconque des revendications précédentes, **caractérisé en ce que** la seconde membrane (10, 52) est alimentée directement par l'agent réducteur acheminé par la pompe de dosage, dans lequel devant la conduite d'alimentation (14) et le volume variable (7), qui est délimité par l'élément à position variable, est aménagé un étranglement (5, 50) pour provoquer une chute de pression et le rapport de tailles des deux membranes (9, 10, 51, 52) est choisi de sorte que la première membrane (9, 51) délimitant le volume variable (7) soit commutée, lors de l'alimentation de la seconde membrane (10, 52) par l'agent de réduction acheminé en raison du couplage cinématique des deux membranes (9, 10, 51, 52), de la position de repos dans la position de service à l'encontre de la force de rappel.

6. Système de dosage selon la revendication 5,**caractérisé en ce que** :les deux membranes couplées (51, 52) et l'étranglement (50) sont conçus d'un seul tenant, en particulier la barrette servant de liaison entre les deux membranes (51, 52) présente l'étranglement (50).

7. Système de dosage selon l'une quelconque des revendications précédentes, **caractérisé en ce que** le côté refoulement de la pompe de dosage (1) débouche dans le volume variable (7) via une entrée, dans lequel la conduite d'alimentation (14, 17) est raccordée à une sortie du volume variable.

8. Système de dosage selon la revendication 7,
**caractérisé en ce que** :
le côté arrière de l'élément à position variable (9) tourné vers l'entrée et la sortie est alimenté en air comprimé venant d'une source d'air comprimé (20) au moyen duquel l'élément à position variable (9) est commuté à l'encontre de la force de rappel de sa position de repos dans la position de service.

9. Système de dosage selon l'une quelconque des revendications précédentes, **caractérisé en ce qu'**il est prévu une source d'air comprimé (20) qui présente une soupape de commande (21) et/ou une soupape de réglage de pression.

10. Système de dosage selon l'une quelconque des revendications précédentes, **caractérisé en ce que** l'élément à position variable, qui délimite le volume variable (7), est formé par une membrane (9, 51) qui sert d'amortisseur d'impulsions et compense les pics de pression de la pompe de dosage (1).

11. Système de dosage selon l'une quelconque des revendications précédentes, **caractérisé en ce que** la pompe de dosage (1) est une pompe à membrane ou une pompe à piston.
